# EUROPÄISCHE PATENTSCHRIFT

(11) **EP 1 377 427 B1**
(45) Veröffentlichungstag und Bekanntmachung des Hinweises auf die Patenterteilung: **22.07.2009**
(21) Anmeldenummer: 02732484.7
(22) Anmeldetag: 14.03.2002
(51) Int. Cl.: B29C 45/78, B29C 45/77, B29C 45/76

(54) **VERFAHREN ZUM REGELN DER SCHWINDUNG VON SPRITZTEILEN**
METHOD FOR REGULATING THE CONTRACTION OF MOLDED PARTS
PROCEDE POUR LA REGULATION DU RETRAIT DE PIECES MOULEES PAR INJECTION

(30) Priorität: 22.03.2001 DE 10114228
(43) Veröffentlichungstag der Anmeldung: 07.01.2004
(73) Patentinhaber: Priamus System Technologies AG, 8207 Schaffhausen (CH)
(72) Erfinder: FREY, Jürgen, 73230 Kirchheim/Teck (DE)
(74) Vertreter: Weiss, Peter
(86) Internationale Anmeldenummer: PCT/EP2002/002844
(87) Internationale Veröffentlichungsnummer: WO 2002/076704

(56) Entgegenhaltungen:
- DE-A- 3 608 973
- DE-A- 4 026 731
- PATENT ABSTRACTS OF JAPAN vol. 5, no. 158 (M-91), 12. Oktober 1981 (1981-10-12) & JP 56 084932 A (TOYODA CHUO KENKYUSHO), 10. Juli 1981 (1981-07-10)
- MAUCOTEL J M: "CALCULER RAPIDEMENT LE RETRAIT D'UNE PIECE" REVUE GENERALE DES CAOUTCHOUCS ET PLASTIQUES, SOCIETE D'EXPANSION TECHNIQUE ET ECONOMIQUE. PARIS, FR, Bd. 70, Nr. 721, März 1993 (1993-03), Seiten 39-41, XP000349959 ISSN: 1154-1105

## Beschreibung

Die Erfindung betrifft ein Verfahren zum Regeln der Schwindung von Spritzteilen in einer Kavität in einem Werkzeug einer Spritzgiessmaschine nach Beendigung des Füllvorganges dieser Kavität mit einer Schmelze, wobei die Temperatur und ein Innendruck in der Kavität überwacht und die Temperatur des Werkzeugs geregelt wird.

Bei bekannten Verfahren zum Füllen eines Formwerkzeuges z.B. mit thermoplastischen Kunststoffen wird der Füllvorgang so gesteuert, dass auf eine anfängliche geschwindigkeitsgeführte Phase eine druckgeführte Phase folgt, die bis zum Ende des Füllvorganges andauert. Gegen Ende der geschwindigkeitsgeführten Phase oder im Anfangsbereich der druckgeführten Phase wird die Füllsituation erreicht, bei der der Formhohlraum vollständig mit plastifizierbarer Masse benetzt ist, wobei der Massedruck im Inneren des Formhohlraumes noch möglichst gleichmässige Qualität der Spritzteile erzielt wird. In der Realität ist das Schwindungsverhalten der einzelnen Spritzteile auf Grund von Material, Temperatur- und daraus resultierenden Viskositätsschwankungen jedoch stets unterschiedlich und ändert sich ständig.

Aus der DE 36 08 973 A1 und der DE 40 26 731 A1 ist ein Verfahren zur Beherrschung der isochoren Prozessphase beim Spritzgiessen thermoplastischer Kunststoffe bekannt. Dabei ist gegenüber einem Anguss ein Druckfühler und ein Temperaturfühler angeordnet. In einem Prozessrechner wird ein Temperatur-Druck-Zusammenhang ermittelt, der einer isochoren Abkühlung entspricht. Aus den Zusammenhängen wird der günstigste Zeitpunkt zum Einleiten der isochoren Phase erkannt und ein Betätigungssignal zum Verschliessen des Massekanals gegeben.

Der vorliegenden Erfindung liegt die Aufgabe zugrunde, ein einfaches Verfahren aufzuzeigen, mit dem es möglich ist, das Schwindungsverhalten des Formteils sowohl zwischen einzelnen Kavitäten eines Mehrfachwerkzeuges als auch von Zyklus zu Zyklus eines Spritzvorganges möglichst zu vergleichmässigen.

Zur Lösung dieser Aufgabe führt, dass die Temperatur gegen Ende des Fliessweges der Schmelze überwacht, die Temperatur und der Innendruck in der Kavität durch eine Temperierung des Werkzeugs vom Ende der Füllphase bzw. von einem Druckmaximum in der Kavität bis zum Ende des Spritzzyklus an einen Referenzverlauf angeglichen und der Atmosphärendruck immer bei gleicher Werkzeugtemperatur erreicht wird.

Durch das Angleichen des aktuellen Temperatur- bzw. Werkzeuginnendruckverlaufes an einen Referenzverlauf vom Ende der Füllphase bis zum Ende des Zyklus wird die Schwindung des Spritzteils konstant gehalten. Das Gleiche gilt auch für ein Mehrfachwerkzeug, in dem die Temperatur- bzw. Werkzeuginnendruckverläufe der einzelnen Kavitäten vom Ende der Füllphase bis zum Ende des Zyklus überwacht und individuell geregelt werden.

Um eine gleichbleibende Schwindung zu gewährleisten, muss der Atmosphärendruck bei gleicher Werkzeugwandtemperatur erreicht werden. Zur Bestimmung des Atmosphärendrucks wird der Werkzeuginnendruck gemessen, gleichzeitig wird die Werkzeugtemperatur ermittelt. Durch eine entsprechende Regelung kann so die gleiche Schwindung bei gleichen physikalischen Bedingungen erreicht werden.

Da der Werkzeuginnendruck über die Fliessweglänge auf Grund der Strukturviskosität ständig abnimmt,hat es sich als ratsam erwiesen, einen Werkzeuginnendrucksensor angussnahe zu platzieren, um möglichst viel Information zu erhalten. Dies ist jedoch nicht zwingend und könnte bei einem sogenannten Restdruck, d.h. bei nicht Erreichen des Atmosphärendruckes auf Grund von Werkzeugdeformation, auch nachteilig sein.

Für die Anordnung des Temperatursensors hat sich entgegen früheren Annahmen erwiesen, dass die korrespondierende Messung zum Innendruck nicht exakt an der gleichen Stelle stattfinden muss, sondern dass der Temperatursensor zur Vereinfachung im Bereich des betreffenden Temperierkreislaufes installiert werden kann. Es wird am Ende des Fliessweges angeordnet, da hier der Temperatursensor noch weitere Aufgaben erfüllen kann.

Bei grossflächigen Formteilen ist auch eine relativ grosse Kavität notwendig. Deshalb muss davon ausgegangen werden, dass mehrere Temperierkreisläufe über den Fliessweg hin verteilt angeordnet sind. Zur Schwindungsregelung muss ein Temperatursensor im Bereich desselben Temperierkreislaufes positioniert sein, in dem sich auch der Werkzeuginnendrucksensor befindet. Zusätzlich kann in jedem weiteren Bereich eines Temperierkreislaufes bis zum Fliesswegende hin jeweils ein Temperatursensor und optional ein Drucksensor installiert werden, mit dessen Hilfe auch die Schwindung in diesen Bereichen geregelt wird. Der Zeitpunkt, bei dem die verschiedenen Temperaturen geregelt werden, wird durch den Werkzeuginnendruck bei Erreichen des Atmosphärendrucks einerseits, und der Verlauf der Werkzeugtemperatur vom Maximum bis zum Wert bei Atmosphärendruck andererseits einem vorgegebenen Referenzwert entspricht (Gutteil).

In einem bevorzugten Ausführungsbeispiel der Erfindung werden beide Parameter nicht zeitlich mit einander verglichen, sondern über einander aufgetragen, so dass bei einer absoluten Übereinstimmung eine 45°-Gerade entsteht.

Die Regelung selbst erfolgt völlig unanbhängig von der Spritzgiessmaschine und bezieht sich nur auf das Temperiersystem des Werkzeuges.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Querschnitt durch ein Spritzgiesswerkzeug;
Figur 2a und Figur 2b Diagramme über den Druckverlauf und den Temperaturverlauf beim Füllen einer Kavität;
Figur 3 eine schematische Darstellung von Kavitäten eines Mehrfachspritzwerkzeuges;
Figur 4 eine schematische Darstellung einer Kavität eines Spritzwerkzeuges für grossflächige Formteile;
Figuren 5a und 5b Diagramme über die Darstellung des Druckabfalls beim Schwinden eines Spritzgussteils in einer Kavität.

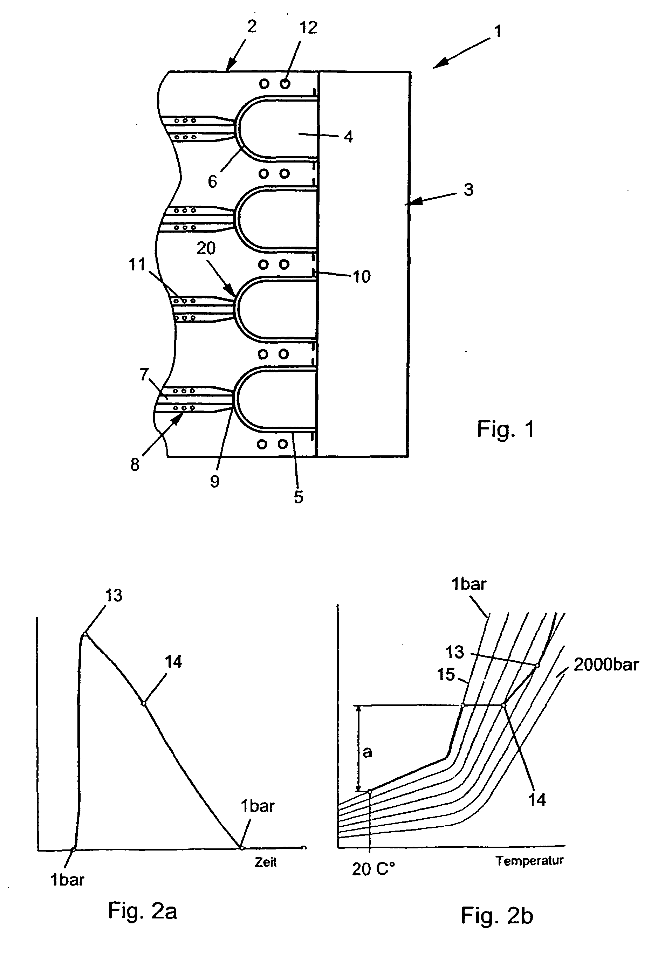

In Figur 1 ist ein geschlossenes Spritzgiesswerkzeug 1 dargestellt. Es besteht im wesentlichen aus zwei Formplatten 2 und 3, wobei von der Formplatte 3 Kerne 4 abstehen, welche in Schliesslage in Kavitäten 5 in der Formplatte 2 eingreifen. Kerne 4 und Kavitäten 5 bilden zusammen jeweils einen Formhohlraum 6, welcher beispielsweise von einer Kunststoffschmelze gefüllt werden kann. Diese wird durch einen Heisskanal 7 einer Düse 8 herbeigebracht und-in den Formhohlraum 6 an einem Anguss 9 eingespritzt.

Erfindungsgemäss ist bevorzugt jeder Kavität 5 zumindest ein Temperatursensor 10 zugeordnet. Dieser Temperatursensor 10 befindet sich am Ende des Füllweges der Kavität 5, bevorzugt etwa bei 95-98 % des Füllweges der Kavität. Ferner ist der Kavität 5 ein Drucksensor 20 zugeordnet, welcher nahe dem Anguss 9 vorgesehen ist.

In den Düsen 8 befinden sich Heizkanäle 11, durch welche eine Kunststoffschmelze im Heisskanal 7 auf einer gewünschten Temperatur gehalten wird. Dagegen befinden sich in der Fromplatte 2 im Bereich der Kavitäten 5 Kühlkanäle 12, welche wiederum den Kunststoff in dem Formhohlraum 6 auf eine gewünschte Temperatur bringen, damit er dort nach einem gewünschten Zeitraum erstarrt und der geformte Gegenstand aus der Kavität 5 entnommen werden kann.

In Figur 2a ist erkennbar, dass beim Befüllen der Kavität 5 mit Schmelze der Druck sehr schnell bis zu einem Maximum 13 ansteigt, dann langsamer bis zu einem Siegelpunkt 14 abfällt, an dem der Anguss verschlossen ist.

Danach fällt der Druck weiter auf 1 bar ab und erreicht schliesslich eine Temperatur von 20° Celsius.

Wird insbesondere der Vorgang nach der Beendigung des Füllens über der Temperatur gemäss Figur 2b aufgetragen, so ist bei 13 das Druckmaximum zu erkennen. Danach sinkt die Temperatur auf den Siegelpunkt 14 ab und danach auf die 1-bar Isochore 15, wobei jetzt das Schwinden des Formteiles beginnt. Das Formteil schwindet in dem Bereich a, bis die Temperatur von 20° Celsius erreicht ist. Danach wird das Formteil aus der Kavität 5 entnommen.

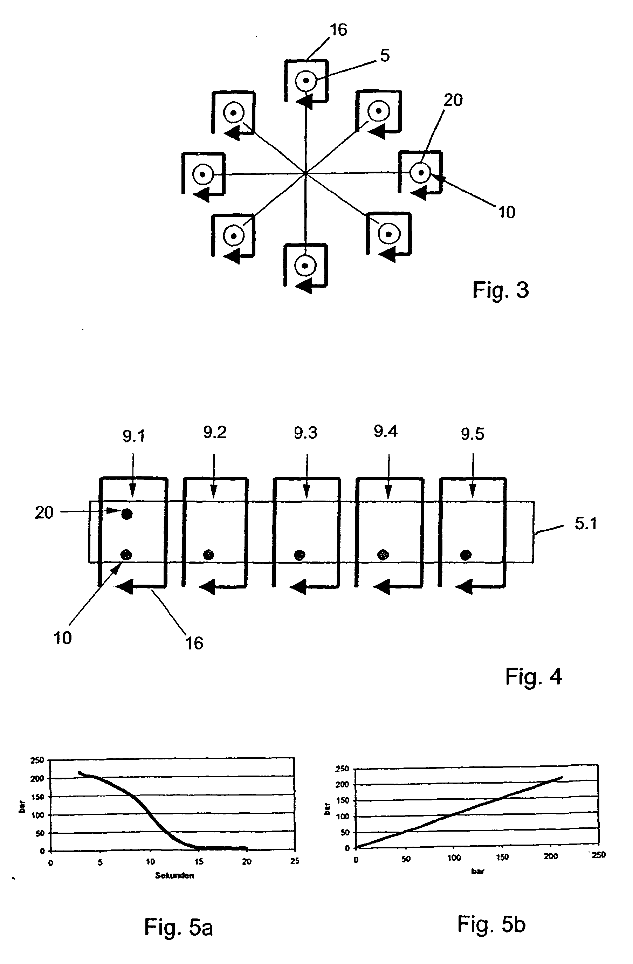

Die Funktionsweise der vorliegenden Erfindung wird anhand der Figuren 3 bis 5b dargestellt.

In Figur 3 ist ein Mehrfachwerkzeug schematisch dargestellt. Jeder einzelnen Kavität 5 ist ein eigener Temperierkreislauf 16 zugeordnet, der beispielsweise die Kühlkanäle 12 aufweist. Jeder Kavität 5 ist ferner ein Drucksensor 20 und ein Temperatursensor 10 zugeordnet.

Durch den Temperatursensor 10 wird die Temperatur in der Kavität 5 überwacht, der Innendruck in der Kavität 5 wird von dem Drucksensor 20 ermittelt. Die korrespondierende Messung der beiden Parameter braucht nicht exakt an der gleichen Stelle stattzufinden, sondern kann zur Vereinfachung im Bereich des entsprechenden Temperierkreislaufes 16 geschehen. Jeder einzelne Temperierkreislauf 16 wird geregelt, indem die Temperatur des Temperiermediums so lange angepasst wird, bis der Verlauf des Werkzeuginnendrucks vom Maximum bis zum Erreichen des Atmosphärendrucks einerseits und der Verlauf der Werkzeugtemperatur vom Maximum bis zum Wert bei Atmosphärendruck andererseits einem vorgegebenen Referenzwert entspricht.

Beide Parameter werden gemäss Figur 5b nicht zeitlich mit einander verglichen, sondern über einander aufgetragen, so dass im Falle einer absoluten Übereinstimmung eine 45°-Gerade gezeigt ist. Diese Darstellung wird bevorzugt, obwohl in Figur 5a auch noch der Druckverlauf nach dem Füllen über der Zeit dargestellt ist.

Bei einem Werkzeug, in welchem grossflächlige Formteile hergestellt werden, ist die Kavität 5.1 wesentlich vergrössert. Deshalb besitzt eine derartige Kavität 5.1 auch mehrere Angüsse 9.1 bis 9.5, wobei zumindest dem Anguss 9.1 auch ein Drucksensor 20 zugeordnet ist. Je nach Bedarf kann selbstverständlich auch den anderen Angüssen 9.2 bis 9.5 jeweils ein Drucksensor 20 zugeordnet sein. Dies muss jedoch nicht sein.

Ferner besitzt die Kavität 5.1 mehrere Temperierkreisläufe 16 und mehrere Temperatursensoren 10.

Die Regelung erfolgt, wie oben beschrieben.

### Positionszahlenliste

| | | | | | |
|---|---|---|---|---|---|
| 1 | Werkzeug | 34 | | 67 | |
| 2 | Formplatte | 35 | | 68 | |
| 3 | Formplatte | 36 | | 69 | |
| 4 | Kerne | 37 | | 70 | |
| 5 | Kavität | 38 | | 71 | |
| 6 | Formhohlraum | 39 | | 72 | |
| 7 | Heisskanal | 40 | | 73 | |
| 8 | Düse | 41 | | 74 | |
| 9 | Anguss | 42 | | 75 | |
| 10 | Temperatursensor | 43 | | 76 | |
| 11 | Heizkanal | 44 | | 77 | |
| 12 | Kühlkanäle | 45 | | 78 | |
| 13 | Druckmaximum | 46 | | 79 | |
| 14 | Siegelpunkt | 47 | | | |
| 15 | Isochore | 48 | | | |
| 16 | Temperierkreislauf | 49 | | | |
| 17 | | 50 | | | |
| 18 | | 51 | | | |
| 19 | | 52 | | a | Bereich |
| 20 | Innendrucksensor | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Regeln der Schwindung von Spritzteilen in einer Kavität (5, 5.1) in einem Werkzeug (1) einer Spritzgiessmaschine nach Beendigung des Füllvorganges dieser Kavität (5, 5.1) mit einer Schmelze, wobei die Temperatur und ein Innendruck in der Kavität (5, 5.1) überwacht und die Temperatur des Werkzeugs (1) geregelt wird,
**dadurch gekennzeichnet,**
**dass** die Temperatur gegen Ende des Fliessweges der Schmelze überwacht, die Temperatur und der Innendruck in der Kavität (5, 5.1) durch eine Temperierung des Werkzeugs vom Ende der Füllphase bzw. von einem Druckmaximum (13) in der Kavität (5, 5.1) bis zum Ende des Spritzzyklus an einen Referenzverlauf angeglichen und der Atmosphärendruck immer bei gleicher Werkzeugtemperatur erreicht wird.

2. Verfahren nach Anspruch 1, **dadurch gekennzeichnet, dass** die Ermittlung der Werkzeugtemperatur im Bereich des Temperierkreislaufes (16) der Kavität (5, 5.1) erfolgt.

3. Verfahren nach Anspruch 1 oder 2, **dadurch gekennzeichnet, dass** der Innendruck nahe einem Anguss (9-9.5) ermittelt wird.

4. Verfahren nach einem der Ansprüche 1 - 3, **dadurch gekennzeichnet, dass** bei Kavitäten (5.1) mit mehreren Temperierkreisläufen (16) (für grossflächige Formteile) jeder Temperierkreislauf (16) geregelt und der Zeitpunkt, bei dem die verschiedenen Temperaturen geregelt werden, durch den Werkzeuginnendruck bei Erreichen des Atmosphärendrucks bestimmt wird.

5. Verfahren nach wenigstens einem der Ansprüche 1 - 4, **dadurch gekennzeichnet, dass** der tatsächliche Temperatur- und/oder Druckverlauf über den jeweiligen Referenzverlauf dargestellt wird.

## Claims

1. Method for controlling the shrinkage of injection parts in a cavity (5, 5.1) in a mould (1) of an injection moulding machine after the operation of filling this cavity (5, 5.1) with a melt has ended, wherein the temperature and an internal pressure in the cavity (5, 5.1) are monitored and the temperature of the mould (1) is controlled,
**characterized in,**
**that** towards the end of the flow path of the melt the temperature is controlled, the temperature and the internal pressure in the cavity (5, 5.1) are matched to a reference profile by controlling the temperature of the mould from the end of the filling phase, and from a pressure maximum (13) in the cavity (5, 5.1), respectively, until the end of the injection cycle and in that the atmospheric pressure is always reached at the same mould temperature.

2. Method according to claim 1, **characterized in that** the mould temperature is determined in the region of the temperature control circuit (16) of the cavity (5, 5.1).

3. Method according to claim 1 or 2, **characterized in that** the internal pressure is determined near a sprue (9 - 9.5).

4. Method according to one of the claims 1 to 3, **characterized in that**, in the case of cavities (5.1) having a plurality of temperature control circuits (16) (for large area mouldings), each temperature control circuit (16) is controlled, and the time at which the different temperatures are controlled is determined by the mould internal pressure when atmospheric pressure is reached.

5. Method according to at least one of the claims 1 to 4, **characterized in that** the actual temperature and/or pressure profile is plotted against the respective reference profile.

## Revendications

1. Procédé pour régler le retrait de pièces moulées par injection dans une cavité (5, 5.1) dans un moule (1) d'une machine à mouler par injection à la fin de l'opération de remplissage de cette cavité (5, 5.1) par un matériau en fusion, la température et une pression intérieure dans la cavité (5, 5.1) étant surveillées et la température du moule (1) étant réglée,
**caractérisé par le fait que**
la température à la fin du trajet de coulée du matériau en fusion est surveillée, la température et la pression intérieure dans la cavité (5, 5.1) est compensée par une thermostatisation du moule de la fin de la phase de remplissage ou d'une pression maximale (13) dans la cavité (5, 5.1) à la fin du cycle d'injection par rapport à une évolution de référence et la pression atmosphérique est toujours atteinte à la même température de moule.

2. Procédé selon la revendication 1, **caractérisé par le fait que** la détermination de la température de moule a lieu à l'endroit du circuit de thermostatisation (16) de la cavité (5, 5.1).

3. Procédé selon la revendication 1 ou 2, **caractérisé par le fait que** la pression intérieure est déterminée près d'un canal d'alimentation (9 à 9.5).

4. Procédé selon l'une des revendications 1 à 3, **caractérisé par le fait que**, dans le cas de cavités (5.1) à plusieurs circuits de thermostatisation (16) (pour des éléments moulés à grande surface), chaque circuit de thermostatisation (16) est réglé et le moment où sont réglées les différentes températures est déterminé par la pression intérieure du moule lorsque la pression atmosphérique est atteinte.

5. Procédé selon au moins l'une des revendications 1 à 4, **caractérisé par le fait que** l'évolution de température et/ou de pression réelle est représentée au-dessus de l'évolution de référence respective.
